# FASCICULE DE BREVET EUROPEEN

(11) **EP 2 338 748 B1**
(45) Date de publication et mention de la délivrance du brevet: **17.07.2013**
(21) Numéro de dépôt: 10195532.6
(22) Date de dépôt: 16.12.2010
(51) Int. Cl.: B60T 8/17, B60T 8/88, B60L 7/00

(54) **Architecture dissymétrique de freinage électrique pour aéronef**
Unsymmetrischer Aufbau der Elektrobremse für ein Luftfahrzeug
Non-symmetrical electric braking architecture for aircraft

(30) Priorité: 24.12.2009 FR 0959589
(43) Date de publication de la demande: 29.06.2011
(73) Titulaire: Messier-Bugatti-Dowty, 78140 Velizy Villacoublay (FR)
(72) Inventeur: Thibault, Julien, 91190, Gif-sur-Yvette (FR); Colin, Emmanuel, 75014, Paris (FR)
(74) Mandataire: Parzy, Benjamin Alain

(56) Documents cités:
- WO-A1-2008/144378
- US-A1- 2006 108 867
- US-A1- 2008 258 547

## Description

L'invention est relative à une architecture dissymétrique de freinage électrique pour aéronef.

### ARRIERE-PLAN TECHNOLOGIQUE DE L'INVENTION

La prévention des modes communs de défaillance dans des architectures complexes redondées est une démarche essentielle de conception, bien connue des spécialistes des systèmes. Les modes communs de défaillance sont des événements affectant un certain nombre d'éléments d'une architecture identiques ou similaires entre eux, considérés comme indépendants. La demande de brevet US2008/0258547 illustre ce principe en décrivant une architecture de freinage dans laquelle l'ensemble des organes de l'architecture sont redondants et similaires, y compris jusque dans la fonction anti-skid intégrée aux contrôleurs de freinage. L'utilisation de technologies dissimilaires pour réaliser des architectures à chaînes redondées dissymétriques permet de minimiser les risques de modes communs de défaillance.

Dans les architectures de freinage hydraulique, l'utilisation massive du principe de dissimilarité est bien connue. Donnons à titre d'exemple une architecture de freinage hydraulique dans laquelle :
- Le freinage est assuré en mode Normal au moyen d'un boîtier de commande Normal BCU (pour Brake Control Unit) et des servovalves (SV) pour convertir une consigne de freinage générée par le BCU en une puissance hydraulique à destination des freins. Le boîtier de commande Normal reçoit des ordres de freinage par des pédales, tandis que les servovalves sont alimentées par un réseau de puissance hydraulique Normal.
- Le freinage est assuré en mode Secours au moyen d'un boîtier de commande Secours EBCU (pour Emergency Brake Control Unit), et des servovalves à commande directe DDV (pour direct drive valve).
- Un freinage ultime peut être assuré au moyen d'une réserve de puissance hydraulique et d'une commande de freinage provenant de la manette de parc.

Dans ce type d'architecture, on conserve pour la voie secours les mêmes éléments fonctionnels (boîtiers de commande, convertisseurs commande/puissance) que pour la voie normale, les éléments fonctionnels faisant appel à des technologies distinctes. La dissymétrie de technologie est étendue jusqu'à l'actionneur de freinage, en l'occurrence le frein lui-même. Ce dernier peut comporter une double cavité de sorte qu'une cavité soit reliée à la servovalve SV correspondante du circuit normal et l'autre cavité soit reliée à la servovalve DDV correspondante du circuit secours. Le frein peut encore ne disposer que d'une simple cavité, en étant associé à un clapet navette pour recevoir la puissance hydraulique de l'une ou l'autre des voies, en ségrégant ces deux voies.

Dans le cadre du freinage électrique assuré au moyen d'actionneurs électromécaniques, la dissimilarité ne descend en général pas jusqu'à l'actionneur de freinage. La dissimilarité se termine avant le dispositif de découpage de la tension vers le moteur de l'actionneur (typiquement l'onduleur contenu dans l'EMAC qui alimente les EBAs en puissance).

Si l'on cherche à rendre une telle architecture moins sensible aux modes communs de défaillance, il est immédiat de tenter de redonder le circuit Normal de manière asymétrique, c'est-à-dire en en dupliquant tous ses éléments fonctionnels (BCU, EMACs) en utilisant des technologies distinctes, afin d'obtenir un mode Secours dissimilaire. Cette solution présente néanmoins l'inconvénient d'être très coûteuse, tant du point de vue de la masse que du point de vue économique.

### OBJET DE L'INVENTION

La présente invention propose une architecture innovante permettant de minimiser le risque de mode commun de défaillance, sur la chaîne normale et la chaîne secours, sans toutefois pratiquer une simple duplication dissimilaire.

### BREVE DESCRIPTION DE L'INVENTION

L'invention est relative à une architecture dissymétrique de freinage électrique pour aéronef, comportant un certain nombre d'actionneurs électromécaniques de freinage ou EBAs (pour Electromechanical Brake Actuator) pour appliquer sélectivement un effort de freinage sur des éléments de frictions pour ralentir la rotation des roues freinées, l'architecture comprenant :
- Une unité de commande ou BCU (pour Brake Control Unit) pour, en mode normal, générer des consignes de freinage en réponse à un ordre de freinage;
- des contrôleurs ou EMACs comportant chacun au moins un onduleur pour distribuer une puissance aux EBAs en réponse aux consignes de freinage ;
- au moins une unité de secours ou EBPCU (pour Emergency brake Power and Control Unit) comportant au moins un onduleur pour distribuer une puissance à une partie des EBAs en réponse à un ordre de freinage ;
- des moyens de protection pour canaliser une puissance distribuée par les EMACs ou l'EBPCU, vers les actionneurs, en empêchant une remontée de puissance vers l'architecture.

Ainsi, la redondance dissymétrique est réalisée non pas en dupliquant les équipements de la chaîne normale en utilisant des technologies dissimilaires, mais en proposant une chaîne secours constituée de façon essentiellement différente, et en prévoyant des moyens, analogues à des clapets navettes en hydraulique, pour assurer que la puissance distribuée par les EMACs ou par l'EBPCU aille bien aux actionneurs et ne remonte pas vers l'autre chaîne.

### BREVE DESCRIPTION DES FIGURES

L'invention sera mieux comprise à la lecture de la description qui suit d'un mode particulier de mise en oeuvre de l'invention :
- la figure 1 est une vue schématique d'une architecture dissymétrique de freinage selon un mode particulier de réalisation de l'invention, lors d'un fonctionnement nominal de l'architecture de freinage ;
- la figure 2 est une vue schématique de l'architecture de la figure 1, lors d'un freinage en mode alterné, à la suite de la perte de l'une des alimentations de puissance ;
- la figure 4 3 est une vue schématique de l'architecture de la figure 1, lors d'un freinage d'urgence, à la suite de la perte de l'un des composants essentiels de la chaîne normale ;

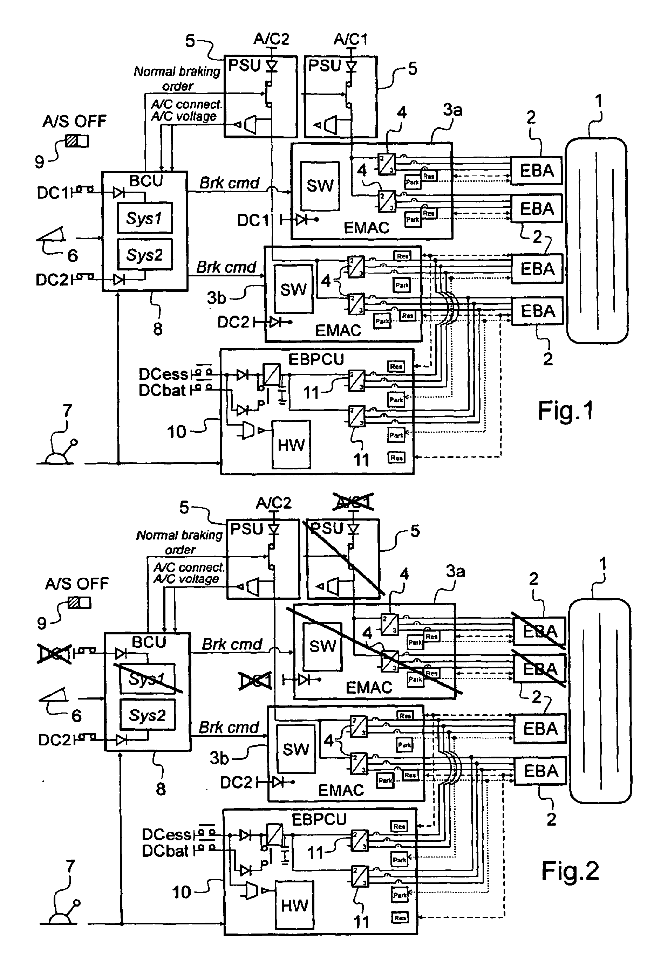

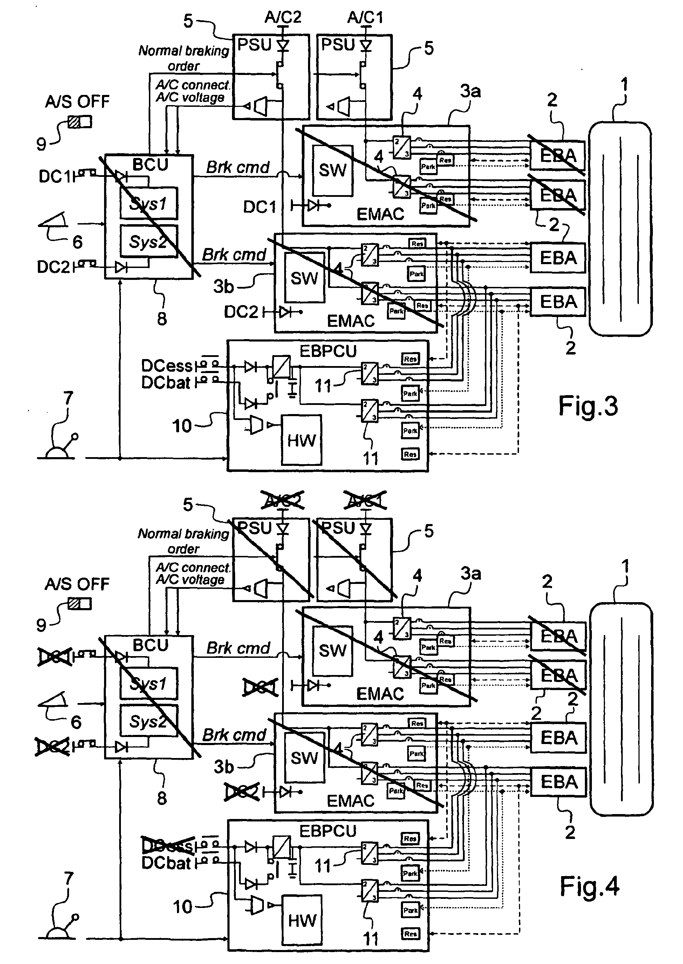

- la figure 4 est une vue de l'architecture de la figure 1, lors d'un freinage ultime à l'aide du boîtier secours ;

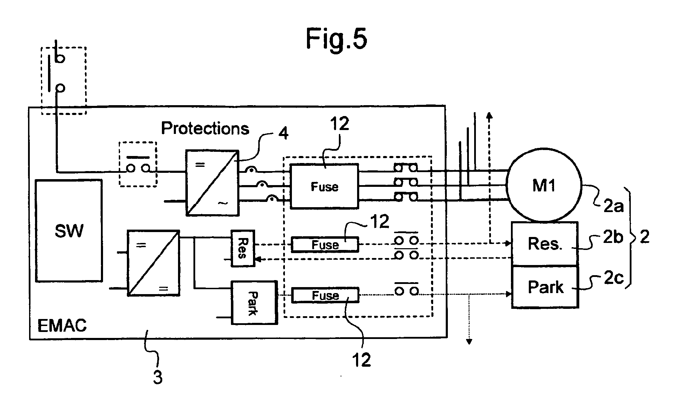

- la figure 5 est une vue schématique d'un actionneur électromécanique et de l'EMAC associé.

### DESCRIPTION DETAILLEE DES FIGURES

En référence à la figure 1, l'architecture dissymétrique de l'invention est ici appliquée à un aéronef comportant un certain nombre de roues freinées 1 (seule l'une d'entre elles a été représentée), celles-ci étant équipées de freins comportant des disques de friction qui sont pressés les uns sur les autres au moyen d'actionneurs électromécaniques de freinage 2 ou EBAs. Ici, chaque frein comporte quatre EBAs. Les EBAs de tous les freins sont alimentés par des contrôleurs ou EMAC 3a, 3b qui comportent chacun des onduleurs 4 pour distribuer de la puissance électrique aux EBAs concernés en réponse à une consigne de freinage (brk cmd sur la figure). Ici, les EBAs de chaque frein sont alimentés par paire par deux EMACs distincts. L'EMAC 3a est connecté à une première source de courant continue DC1 pour l'alimentation des cartes électroniques (SW sur la figure) incluses dans l'EMAC 3a, tandis que l'EMAC 3b est connecté à une deuxième source de puisance continue DC2 pour l'alimentation des cartes électroniques (SW sur la figure) incluses dans l'EMAC 3b. Le cas échéant, les EMACs peuvent également contrôler des EBAs sur d'autres roues.

La puissance électrique alternative qui, après découpage par les onduleurs des EMACs 3, est délivrée aux EBAs 2, provient de deux unités de fourniture d'alimentation ou PSUs (pour Power Supply Units) 5, qui sont chargées de calibrer la puissance provenant des deux réseaux de puissance alternative de l'aéronef AC1 et AC2.

Les consignes de freinage (brk cmd sur la figure) délivrées aux EMACs 3a, 3b sont générées par une unité de commande ou BCU 8 en réponse à la réception d'ordre de freinage provenant de pédales de freinage 6 ou d'un levier de freinage de parc 7. De façon connue en soi, le BCU 8 comporte deux canaux de calcul (sys1 et sys2), chacune alimentée par une source de puissance continue distincte, respectivement DC1 et DC2. Il est connu de redonder le BCU et de prévoir au moins un deuxième BCU, comportant également deux canaux de calcul.

Les divers éléments décrits ci-dessus forment la chaîne normale de freinage.

La chaîne de freinage secours est constituée selon l'invention comme suit. Elle comporte une unité de secours (EBPCU pour Emergency Brake and Power Control Unit) 10 comportant des onduleurs 11 pour, à partir d'une alimentation continue provenant soit du réseau essentiel de l'aéronef (DCEss), soit de la batterie (DCBat), générer une puissance alternative en direction de certains seulement des actionneurs 2. Ici, seule une moitié des EBAs 2 de l'aéronef est alimentée par l'EBPCU (en l'occurence, les actionneurs alimentés par l'EMAC 3b). On remarquera qu'ici, l'EBPCU 10 reçoit le signal provenant du levier de freinage de parc 7, mais ne reçoit pas le signal provenant des pédales de freinage 6.

Ainsi, la chaîne secours est totalement dissymétrique. Contrairement au principe connu de dissimilarité dans lequel on se contente de dupliquer les éléments de la chaîne normale en changeant la technologie de réalisation de ces éléments, la chaîne secours est ici essentiellement différente de la chaîne normale sur plusieurs points :
- l'EBPCU 10 ne reçoit que le signal du levier de parc, alors que le BCU 8 reçoit le signal des pédales 6 et le signal du levier de parc 7 ;
- dans la chaîne normale, l'élaboration des consignes se fait dans un boîtier (le BCU) distinct des boîtiers (EMACs) contenant les onduleurs, ce qui n'est pas le cas dans la chaîne secours ;
- les onduleurs de la chaîne normale sont alimentés en puissance alternative, alors que l'onduleur de la chaîne secours est alimentée en tension continue, dont la source est présumée indépendante des alternateurs fournissant les alimentations AC1 et AC2 ;
- la chaîne normale alimente tous les actionneurs, alors que la chaîne secours n'alimente qu'une partie des actionneurs.

De préférence, la chaine secours et l'EBPCU en particulier, ne comporte aucun logiciel, mais uniquement une logique câblée ou de façon générale, des moyens matériels, pour déterminer une consigne de freinage pour commander l'onduleur associé.

En outre, la chaîne secours comporte, pour les actionneurs concernés, moins de lignes d'alimentation que dans la chaine normale. En effet, l'organe de blocage de parc 2c et 1e resolver 2b (voir figure 6) équipant chaque EMA2 sont reliés à l'EMAC correspondant, mais pas à l'EBPCU.

La dissymétrie ainsi réalisée est donc totale, tout en n'ayant pas eu recours à la simple duplication dissimilaire des éléments de la chaîne normale.

Pour commander le freinage au moyen de l'architecture ainsi décrite, le pilote dispose des commandes suivantes :
- les pédales de frein 6, pour commander un ralentissement de l'aéronef ;
- le levier de parc 7, pour commander une assurer une immobilisation de l'aéronef lorsque celui-ci est arrêté, ou pour commander un freinage ultime, comme cela sera précisé plus loin ;
- un sélecteur AS/OFF 9, permettant au pilote d'indiquer s'il souhaite la mise en oeuvre d'une protection d'antidérapage, ou non.

Les différents modes de fonctionnement de l'architecture de l'invention vont maintenant être détaillés.

Lorsque tous les éléments de la chaîne normale fonctionnent et sont normalement alimentés par les différentes sources de puissance de l'aéronef, le pilote peut procéder à des freinages selon les modes suivants :
- mode de freinage normal : Le sélecteur AS/OFF étant sur la position AS, le pilote peut commander une décélération au moyen des pédales. Le BCU 8 génère alors des consignes de freinage pour les EMACs 3, qui distribuent la puissance correspondante aux EBAs 2 pour freiner les roues selon la décélération désirée ;
- mode de freinage de parc : une fois l'aéronef arrêté, le pilote peut assurer son immobilisation en commande un freinage de parc au moyen du levier de parc. Le BCU 8 génère alors des consignes de freinage pour les EMACs 3, qui distribuent la puissance correspondante aux EBAs 2 pour presser les disques, puis maintenir l'effort le temps de bloquer les poussoirs des EBAs 2 en position.

Dans une situation illustrée à la figure 2 dans laquelle l'un des alternateurs électriques de l'aéronef est défaillant, conduisant à la perte de la source alternative et de la source continue correspondante (ici perte des sources AC1 et DC1), le PSU correspondant n'est plus en mesure de fournir de la puissance aux EMACs 3a. En outre, les cartes électroniques de ces EMACs ne sont plus alimentées. Les EBAs 2 reliés aux EMACs 3a sont donc inutilisables. De plus, l'un des canaux de calcul du BCU est neutralisé du fait qu'il n'est lui-même plus alimenté. Il reste néanmoins possible d'assurer un freinage en utilisant le deuxième canal de calcul (sys2) du BCU 8 pour générer des consignes de freinage à destination des EMACs 3b qui restent alimentés. Ce mode de freinage est appelé mode alternatif. Dans ce mode, il est possible de demander aux EBAs 2 valides d'exercer un effort de freinage plus important pour compenser la perte des EBAs 2 non alimentés. Selon une variante de l'invention, la chaîne normale peut comporter plusieurs BCUs 8. La perte d'une source de puissance continue DC1 ou DC2, faisant perdre sur tous les BCUs 8 l'un des canaux de calcul, peut être compensée en reconfigurant les canaux de calculs valides (ceux qui restent alimentés) pour délivrer des consignes à tous les EMACs 3.

Dans une autre situation illustrée à la figure 3 lors de laquelle le BCU 8 ou tous les EMACs 3 tombent en panne (par exemple, en cas de boucle infinie logicielle affectant les deux canaux de calcul du BCU, ou les EMAC 3a et 3b, par l'effet d'une panne de mode commun), il n'est bien sûr plus possible de freiner au moyen de la chaîne normale. Le pilote constate une telle situation lorsqu'en appuyant sur les pédales 6, il n'obtient aucun freinage. Le pilote positionne alors le sélecteur AS/OFF 9 sur la position OFF. C'est le signal donné à l'architecture pour activer la chaîne secours. C'est le mode de freinage secours. Le freinage est alors effectué par l'EBPCU 10, qui reçoit un signal de freinage au moyen du levier de parc 7 actionné par le pilote. L'EBPCU 10 envoie alors aux EBAs 2 concernés une puissance calibrée en réponse à l'actionnement du levier de parc 7, la puissance étant ici tirée de la source de courant continue DCEss. Lors de ce freinage, les poussoirs des EBAs 2 ne sont bien sûr pas bloqués en position, comme lors d'un freinage de parc.

Enfin, dans une situation critique telle qu'illustrée à la figure 4, il se peut que les alternateurs de l'aéronef soient tous deux défaillants, de sorte que plus aucune source de puissance n'est disponible à part la batterie. De la même façon que dans la situation précédente, le pilote ne reçoit aucune réponse quand il appuie sur les pédales. Il positionne alors le sélecteur AS/OFF 9 sur la position OFF. La chaîne secours est alors activée. Le freinage est alors effectué par l'EBPCU 10, qui reçoit un signal de freinage au moyen du levier de parc actionné par le pilote. L'EBPCU 10 envoie alors aux EBAs 2 concernés une puissance calibrée en réponse à l'actionnement du levier de parc, la puissance provenant alors uniquement des batteries DCBat. C'est le mode de freinage ultime.

Selon un mode particulier de mise en oeuvre destiné à économiser la puissance provenant des batteries, les EBAs 2 peuvent être bloqués en position d'application d'effort, après la première application d'effort. Ainsi, l'effort de freinage est maintenu sans consommer la puissance provenant de la batterie. A cet effet, l'EBPCU 10 est programmé pour commander l'organe de verrouillage équipant les EBAS concernés après l'application de l'effort de freinage afin de bloquer le poussoir de ces EBAs 2 en position.

Selon une disposition importante illustrée à la figure 5, il convient que, lorsque la chaîne secours est activée et que les EBAs 2 concernés reçoivent de la puissance de l'EBPCU 10, cette puissance aille bien vers les EBAs 2 et ne vienne pas polluer les EMACs 3 concernés en provoquant un retour de puissance intempestif dans la chaîne normale. L'activation de la chaîne secours alors que les EMACs 3 sont en parfait état de fonctionnement ne peut conduire à une remontée de puissance depuis l'EBPCU 10 vers la chaîne normale, puisque les transistors de puissance formant les onduleurs des EMACs 3 sont normalement ouverts, et que les onduleurs sont normalement déconnectés, empêchant ainsi toute remontée de puissance. Cependant, la situation serait différente si dans l'un des EMACs 3 concernés, l'un des transistors était resté en position fermée, par exemple à la suite d'une défaillance de ce transistor. Dans ce cas, l'EMAC 3 concerné agit comme un court-circuit, et de la puissance délivrée par l'EBPCU 10 est susceptible de remonter la chaîne normale via cet EMAC. Pour remédier à ce problème, il convient d'équiper l'architecture de moyens de protection pour garantir que la puissance délivrée par l'EBPCU 10 soit bien canalisée vers les EBAs 2, et empêcher une remontée de puissance vers la chaîne normale. A cet effet, les EMACs 3 sont ici équipés de fusibles 12 sur leurs lignes de sortie, ces fusibles étant adaptés, au cas où un transistor serait resté fermé dans l'un des EMACs 3, à couper toute liaison entre les EBAs 2 concernés et cet EMAC 3 lors d'une fourniture de puissance par l'EBPCU 10 indépendamment du fait que l'EMAC 3 concerné est alimenté ou non. Ici les fusibles sont disposés sur toutes les liaisons entre l'EBA 2 et l'EMAC 3, et donc sur les lignes alimentant le moteur 2A, le resolver 2b et l'organe de verrouillage de parc 2c de l'EBA 2. En variante, les moyens de protection comportent, en complément ou en remplacement des dispositifs passifs constitués par les fusibles, des dispositifs actifs comme des relais (normalement ouverts).

Réciproquement, il importe également que la puissance provenant de la chaîne normale, donc des EMACs 3, soit bien consommée par les EBAs 2 et ne remonte pas vers la chaîne secours. A cet effet, l'EBPCU 10 est également pourvu de fusibles sur ses lignes de sortie, de sorte qu'au cas où l'un des transistors de l'onduleur de l'EBPCU 10 serait resté fermé, les fusibles coupent la liaison entre l'EBPCU 10 et les EBAs 2 correspondants et empêchent ainsi la remontée de puissance des EMACs 3 vers l'EBPCU 10 lors d'une fourniture de puissance par les EMACs 3 et en canalisant cette puissance vers les EBAs 2 concernés.

Ainsi, les deux chaînes sont électriquement étanches et ne risquent pas de subir des remontées intempestives de puissance en provenance de l'autre chaîne. On remarquera que les fusibles 12 sont installés dans les EMACs et l'EBPCU en amont des points communs entre les lignes d'alimentation provenant des EMACs et de l'EBPCU qui aboutissent aux mêmes actionneurs.

L'architecture dissymétrique présentée ici est susceptible de présenter de nombreuses caractéristiques additionnelles.

Selon un aspect particulier de l'invention, si le pilote manoeuvre le levier de parc alors que le sélecteur AS/OFF 9 est sur la position AS, la chaîne normale est alors sollicitée et le BCU 8 peut alors comprendre que le pilote tente d'effectuer un freinage de parc, avec blocage en position des poussoirs des EBAs 2, ce qui peut s'avérer délicat si l'aéronef roule toujours. Il convient donc de vérifier si le pilote veut réellement effectuer un freinage de parc. Dans ce cas, il est avantageux de surveiller une information de vitesse (vitesse de l'aéronef, ou vitesse de rotation des roues), pour vérifier si l'aéronef est en mouvement ou s'il est à l'arrêt. Ce n'est que dans ce dernier cas qu'un freinage de parc sera effectué. On peut par exemple désactiver le levier de parc tant que le sélecteur AS/OFF 9 est en position AS.

Selon un autre aspect de l'invention, on peut envisager de remplacer la source DCEss par la source DC1 ou DC2 pour l'alimentation de l'EBPCU 10. On sait en effet que la source DCEss est une source d'alimentation continue recomposée par une combinaison parallèle des sources DC1 et DC2 issues des alternateurs entraînés par le moteur gauche et le moteur droit de l'aéronef. Ainsi, la dissymétrie de l'architecture est encore plus poussée. Ce faisant, crée, au niveau de l'EBPCU 10, un point commun entre la source DC1 (ou DC2) et la source DCBatt, mais jamais entre les sources DC1 et DC2. Si une panne se transmet de DC1 à DCBatt, la source DC2 sera encore disponible pour la chaîne normale, et un freinage sera toujours possible avec cette chaîne.

On peut en outre envisager de fournir le signal de pédales 6 à l'EBPCU 10 pour créer un mode de freinage supplémentaire (freinage différentiel sans antiskid) en cas de perte des EMACs 3 ou des PSUs 5.

On pourra en outre mettre en place une communication entre le ou les BCUs 8 et l'EBPCU 10, ce qui permettra aux BCUs 8 de tester régulièrement le bon fonctionnement de l'EBPCU 10, ce dernier n'étant sollicité que très exceptionnellement.

## Revendications

1. Architecture dissymétrique de freinage électrique pour aéronef, comportant un certain nombre d'actionneurs électromécaniques de freinage ou EBAs (2) pour appliquer sélectivement un effort de freinage sur des éléments de frictions pour ralentir la rotation des roues freinées, l'architecture comprenant :
- une unité de commande ou BCU (8) pour, en mode normal, générer des consignes de freinage en réponse à un ordre de freinage;
- des contrôleurs ou EMACs (3), alimentés chacun par une source de puissance électrique alternative, et comportant chacun au moins un onduleur pour distribuer une puissance électrique aux EBAs en réponse aux consignes de freinage ;
- au moins une unité de secours ou EBPCU (10) alimentée uniquement par une source de puissance électrique continue, et comportant au moins un onduleur pour distribuer une puissance électrique à une partie des EBAs en réponse à un ordre de freinage ;
**caractérisée en ce que** l'architecture de freinage comprend des moyens de protection (12) pour canaliser une puissance distribuée par les EMACs ou l'EBPCU vers les actionneurs en empêchant une remontée de puissance vers l'architecture.

2. Architecture dissymétrique de freinage électrique pour aéronef selon la revendication 1, dans laquelle l'ordre de freinage reçu par l'unité de commande ou BCU (8) provient de pédales de frein (6) ou d'un levier de parc (7), tandis que l'ordre de freinage reçu par l'unité de secours ou EBPCU (10) provient uniquement du levier de parc (7).

3. Architecture dissymétrique de freinage électrique selon la revendication 1, dans laquelle, sur chacune des roues, une première moitié des actionneurs est alimentée par un premier contrôleur (3a), et une deuxième moitié des actionneurs est alimentée par un deuxième contrôleur (3b), seuls les actionneurs de la deuxième moitié étant alimentés par l'unité de secours ou EBPCU (10).

4. Architecture dissymétrique de freinage électrique selon la revendication 2, dans laquelle les contrôleurs ou EMACs (3) alimentant les actionneurs d'une même roue sont alimentés par deux sources de puissance distinctes (AC1,DC1/AC2,DC2) comprenant respectivement une source de puissance alternative pour la fourniture de puissance aux onduleurs, et une source de puissance continue pour la fourniture de puissance à des cartes électroniques des contrôleurs ou EMACs (3).

5. Architecture dissymétrique de freinage électrique selon la revendication 3, dans laquelle l'unité de secours ou EBPCU (10) est alimentée par une source de puissance (DCEss, DCBat) distincte de celles alimentant les contrôleurs ou EMACs (3).

6. Architecture dissymétrique de freinage électrique selon la revendication 1, dans laquelle les moyens de protection pour canaliser une puissance distribuée soit par les contrôleurs ou EMACs (3), soit par l'unité de secours ou EBPCU (10), vers les actionneurs en empêchant une remontée de puissance vers l'architecture, comprennent des dispositifs passifs et/ou actifs (12) disposés sur les lignes d'alimentation des actionneurs électromécaniques ou EBA (2), en amont d'un point commun entre les dites lignes.

7. Architecture dissymétrique de freinage électrique selon la revendication 1, dans laquelle l'unité de secours comporte des moyens matériels pour déterminer une consigne de freinage pour commander l'onduleur associé.

8. Architecture dissymétrique de freinage électrique selon la revendication 1, dans laquelle les actionneurs électromécaniques de freinage comporte chacun un organe de blocage et/ou un resolver qui sont alimentés par les contrôleurs mais pas par l'unité de secours.

## Patentansprüche

1. Asymmetrischer Aufbau für die elektrische Bremsung eines Luftfahrzeugs, umfassend eine bestimmte Anzahl von elektromechanischen Stellgliedern für die Bremsung oder von EBAs (2), um selektiv eine Bremskraft auf Reibungselemente auszuüben, um die Rotation der gebremsten Räder zu verlangsamen, wobei der Aufbau umfasst:
- eine Steuereinheit oder BCU (8), um im Normalmodus als Antwort auf einen Bremsbefehl Sollwerte für die Bremsung zu erzeugen;
- Regler oder EMACs (3), die jeweils durch eine AC-Leistungsquelle gespeist werden und die jeweils mindestens einen Wechselrichter umfassen, um als Antwort auf Sollwerte für die Bremsung eine elektrische Leistung an die EBAs abzugeben;
- mindestens eine Hilfs-Einheit oder EBPCU (10), die nur durch eine DC-Leistungsquelle gespeist wird und die mindestens einen Wechselrichter umfasst, um als Antwort auf einen Bremsbefehl eine elektrische Leistung an einen Teil der EBAs abzugeben;
**dadurch gekennzeichnet, dass** der Aufbau für die Bremsung Schutzvorrichtungen (12) umfasst, um eine von den EMACs oder der EBPCU abgegebene Leistung in Richtung der Stellglieder zu lenken und gleichzeitig ein Wiederansteigen der Leistung in Richtung des Aufbaus zu verhindern.

2. Asymmetrischer Aufbau für die elektrische Bremsung eines Luftfahrzeugs nach Anspruch 1, bei dem der von der Steuereinheit oder BCU (8) empfangene Bremsbefehl von den Bremspedalen (6) oder einem Parkhebel (7) stammt, während der von der Hilfs-Einheit oder der EBPCU (10) empfangene Bremsbefehl einzig vom Parkhebel (7) stammt.

3. Asymmetrischer Aufbau für die elektrische Bremsung nach Anspruch 1, bei dem auf jedem Rad eine erste Hälfte von Stellgliedern durch einen ersten Regler (3a) und eine zweite Hälfte von Stellgliedern durch einen zweiten Regler (3b) gespeist wird, wobei nur die Stellglieder der zweiten Hälfte durch die Hilfs-Einheit oder EBPCU (10) gespeist werden.

4. Asymmetrischer Aufbau für die elektrische Bremsung nach Anspruch 2, bei dem die Regler oder EMACs (3), die die Stellglieder eines selben Rads speisen, durch zwei unterschiedliche Leistungsquellen (AC1, DC1/AC2, DC2) gespeist werden, die jeweils eine AC-Leistungsquelle zur Leistungsversorgung der Wechselrichter und eine DC-Leistungsquelle zur Leistungsversorgung der elektronischen Platinen der Regler oder EMACs (3) enthalten.

5. Asymmetrischer Aufbau für die elektrische Bremsung nach Anspruch 3, bei dem die Hilfs-Einheit oder die EBPCU (10) durch eine Leistungsquelle (DCEss, DCBat) gespeist werden, die unterschiedlich von denen ist, die die Regler oder EMACs (3) speisen.

6. Asymmetrischer Aufbau für die elektrische Bremsung nach Anspruch 1, bei dem die Schutzvorrichtungen zum Lenken einer Leistung, die entweder durch die Regler oder EMACs (3) oder durch die Hilfs-Einheit oder EBPCU (10) abgegeben wurde, in Richtung der Stellglieder unter Verhindern des Wiederansteigens der Leistung in Richtung des Aufbaus, passive und/oder aktive Vorrichtungen (12) umfassen, die in den Versorgungsleitungen zur Versorgung der elektromechanischen Stellglieder oder des EBA (2) stromaufwärts von einem gemeinsamen Punkt zwischen den genannten Leitungen angeordnet sind.

7. Asymmetrischer Aufbau für die elektrische Bremsung nach Anspruch 1, bei dem die Hilfs-Einheit Betriebsmittel umfasst, um einen Sollwert für die Bremsung zum Steuern des zugehörigen Wechselrichters zu ermitteln.

8. Asymmetrischer Aufbau für die elektrische Bremsung nach Anspruch 1, bei dem die elektromechanischen Stellglieder zur Bremsung jeweils ein Organ zum Blockieren und/oder einen Resolver umfassen, die durch die Regler, jedoch nicht durch die Hilfs-Einheit gespeist werden.

## Claims

1. An asymmetrical electric braking architecture for aircraft, comprising a certain number of electro-mechanical brake actuators (EBAs) (2) for selectively applying a braking force on friction elements in order to slow down rotation of braked wheels, said architecture comprising:
· a brake control unit (BCU) (8) for acting in normal mode to generate braking setpoint values in response to a braking order;
· electro-mechanical actuator controllers (EMACs) (3), each powered by an AC electrical power source, and each including at least one inverter for supplying electrical power to the EBAs in response to the braking setpoint values;
· at least one emergency brake power and control unit (EBPCU) (10) powered only by a DC electrical power source, and including at least one inverter for supplying electrical power to some of the EBAs in response to a braking order; and
· protection means (12) for channeling power supplied by the EMACs or the EBPCU towards the actuators while preventing power from being diverted towards the architecture.

2. An asymmetrical electric braking architecture for aircraft according to claim 1, wherein the braking order received by the BCU (8) comes from the brake pedals (6) or from a parking brake lever (7), while the braking order received by the EBPCU (10) comes solely from the parking brake lever (7).

3. An asymmetrical electric braking architecture according to claim 1, wherein on each of the wheels, a first half of the actuators are powered by a first controller (3a), and a second half of the actuators are powered by a second controller (3b), only the actuators of the second half being powered by the EBPCU (10).

4. An asymmetrical electric braking architecture according to claim 2, wherein the EMACs (3) powering the actuators of a given wheel are powered by two separate power sources (AC1,DC1/AC2,DC2) comprising respectively an AC power supply for supplying power to the inverters, and a DC power source for supplying power to the electronic cards of the EMACs (3).

5. An asymmetrical electric braking architecture according to claim 3, wherein the EBPCU (10) is powered by a power source (DCEss, DCBat) that is distinct from the power sources that power the EMACs (3).

6. An asymmetrical electric braking architecture according to claim 1, wherein the protection means for channeling power supplied either by the EMACs (3), or by the EBPCU (10), towards the actuators by preventing power being diverted towards the architecture, includes passive and/or active devices (12) disposed on the power lines of the EBAs (2), upstream of a common point between said power lines.

7. An asymmetrical electric braking architecture according to claim 1, wherein the emergency unit includes hardware means for determining a braking setpoint value for controlling the associated inverter.

8. An asymmetrical electric braking architecture according to claim 1, wherein each electro-mechanical braking actuator includes a blocking member and/or a resolver that is/are powered by the controllers but not by the emergency unit.
